# EUROPEAN PATENT APPLICATION

(11) **EP 1 764 268 A1**
(43) Date of publication of application: **21.03.2007**
(21) Application number: 06018988.3
(22) Date of filing: 11.09.2006
(51) Int. Cl.: B60R 11/02

(54) **Control device for the car radio of a motor vehicle**

(30) Priority: 14.09.2005 IT to20050622
(71) Applicant: BITRON S.p.A., 10042 Nichelino (Torino) (IT)
(72) Inventor: Miolano, Sergio, 12032 Barge CN (IT); Provale, Luigi, 12026 Piasco CN (IT)
(74) Representative: Lotti, Giorgio

(57) **Abstract**

Described herein is a control device for driving the functions of a car radio and/or a phone on board a motor vehicle, said device being mounted on the shell covering the steering column and being made up of a casing, arranged on which are pushbuttons and knobs for control of the functions and housed within which is the block for the control electronics of the device.

## Description

The present invention relates to a control device for the car radio and/or phone for a motor vehicle, in particular a device of the type connected to the steering column, in order to enable regulation of the radio set or use of the phone without the user having to take his hands off the steering wheel and hence without being distracted from driving.

Known to the art are some devices of this type that present different shapes in order to conform to the general appearance of the interior of the motor vehicle.

All known devices, however, present the drawback of being rather cumbersome, even though they contain only the basic controls for regulating the car radio. Such dimensions are necessary to enable a convenient manipulation of the various controls by the driver. Usually, the function of control of the car radio or of the phone is performed though three different blocks in addition to the manual controls proper of the car radio, namely, the remote-control electromechanical device, an interface electronic control unit, and the car radio. All these devices are located in the vehicle, in general on the dashboard, where the space available is no longer overabundant.

The purpose of the present invention is to integrate the electromechanical and electronic functions in a single device, with the purpose of reducing costs, overall dimensions and weight, recovering the unused space for housing a device that otherwise would have to find a place in some other part of the vehicle.

The above purpose is achieved by the present invention, the subject of which is a control device that presents the characteristics of Claim 1.

Further characteristics and advantages will emerge clearly from the ensuing description, with reference to the attached plate of drawings, which are provided purely by way of non-limiting example and in which:

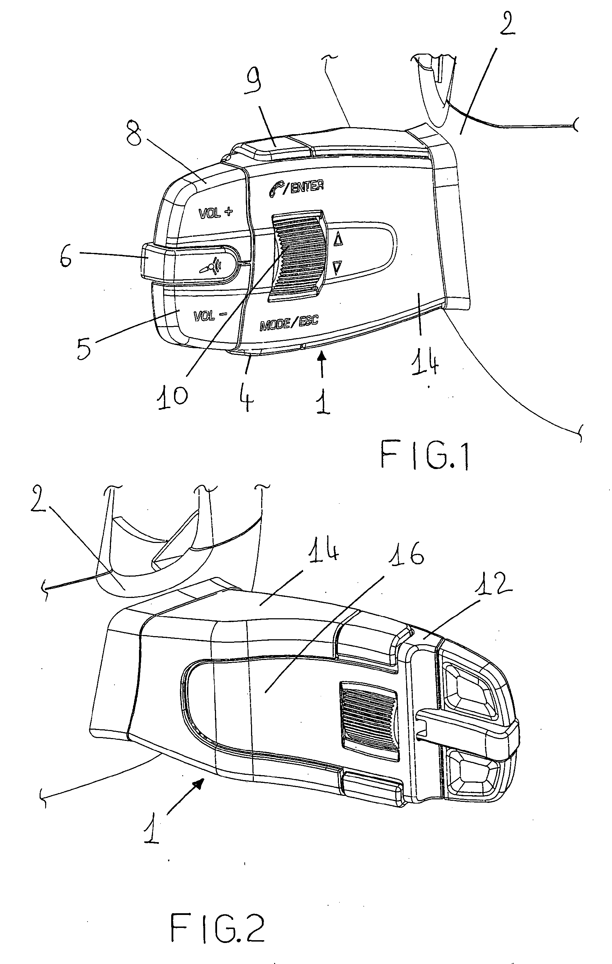

- Figure 1 is a front perspective view of the control device according to the invention;
- Figure 2 is a rear perspective view of the control device according to the invention; and

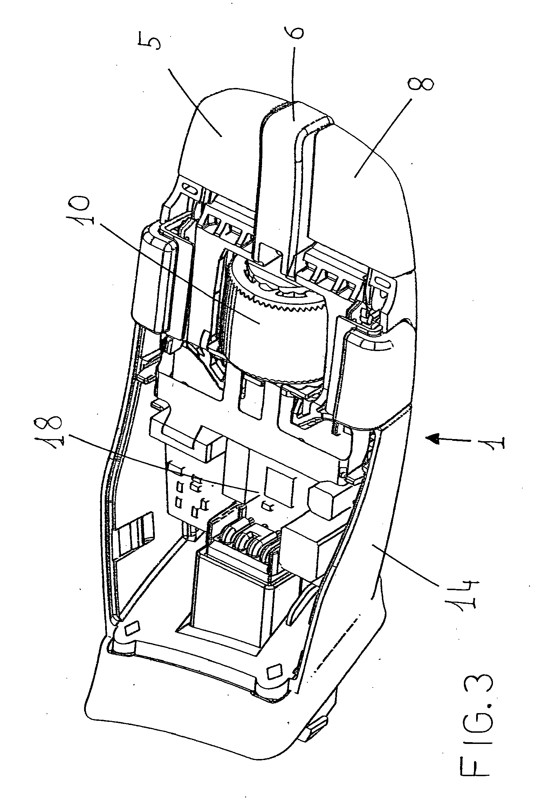

- Figure 3 is a view of the device of Figure 1 without the rear lid.

With reference to the figures, number 1 designates as a whole a control device for driving the functions of the car radio and possibly of another device such as a handsfree phone, without the user having to take his hands off the steering wheel. Usually, the functions of the car radio are performed through three different blocks in addition to the manual controls proper of the car radio, namely, the remote-control electromechanical device, an interface electronic control unit, and the car radio. The device 1 is mounted on the shell 2 covering the steering column, and the functions of the car radio are activated by means of pushbuttons or knobs designated by the reference numbers 4 to 10. The casing 12 of the device 1 is made up of a front shell 14 closed at the rear by a removable lid 16 and provided with attachments for its connection to the shell covering the steering column.

According to the invention, housed within the casing 12 is the block 18 for the control electronics of the device, which enables connection via network (CAN / LAN) with the master of the car. Said solution enables control of the functions of the car radio and/or phone. Of course, said block will be shaped in such a way as to occupy the space available inside the casing.

It remains understood that the shape of the control device may be varied as desired and according to the requirements of the manufacturer, without thereby departing from the sphere of protection of the present invention.

## Claims

1. A control device for driving the functions of a car radio and/or a phone on board a motor vehicle, said device being mounted on the shell covering the steering column and being made up of a casing (12), arranged on which are pushbuttons and knobs for control of the functions (4-10), said control device being **characterized in that** housed within said casing (12) is the block (18) for the control electronics of the device (1).

2. The control device according to Claim 1, **characterized in that** the casing (12) is made up of a front shell (14) and a rear lid (16).

3. The control device according to Claim 1, **characterized in that** the casing (12) is provided with attachments for its connection to the shell (2) covering the steering column.
